# EUROPEAN PATENT APPLICATION

(11) **EP 3 023 654 A1**
(43) Date of publication of application: **25.05.2016**
(21) Application number: 14825895.7
(22) Date of filing: 30.06.2014
(51) Int. Cl.: F16C 19/06, B60K 7/00, F16C 33/32, F16C 33/62

(54) **DEVICE FOR DRIVING IN-WHEEL MOTOR**

(30) Priority: 19.07.2013 JP 2013150959
(71) Applicant: NTN Corporation, Osaka-shi, Osaka 550-0003 (JP)
(72) Inventor: SUZUKI, Minoru, Iwata-shi Shizuoka 438-8510 (JP); UOZUMI, Tomohisa, Iwata-shi Shizuoka 438-8510 (JP)
(74) Representative: Grünecker Patent- und Rechtsanwälte PartG mbB
(86) International application number: PCT/JP2014/067318
(87) International publication number: WO 2015/008606

(57) **Abstract**

Provided is an in-wheel motor drive device (21) including a motor part (A), a speed reduction part (B), a wheel bearing part (C), and a casing (22) configured to hold those parts. The motor part (A) is configured to rotationally drive an input shaft (25) of a speed reducer having eccentric portions (25a, 25b). The speed reduction part (B) is configured to reduce a speed of rotation of the input shaft (25) of the speed reducer to transmit the rotation to an output shaft (28) of the speed reducer. The wheel bearing part (C) is connected to the output shaft (28) of the speed reducer. The speed reduction part (B) includes a lubrication mechanism for the speed reduction part, which is configured to supply lubricating oil to the speed reduction part (B). Rolling bearings (37a, 37b) configured to support the input shaft (25) of the speed reducer are ball bearings each having an initial radial internal clearance (δ) of from 10 µm to 60 µm.

## Description

### TECHNICAL FIELD

The present invention relates to an in-wheel motor drive device.

### BACKGROUND ART

The related-art in-wheel motor drive device is described in, for example, JP 2008-44537 A (Patent Document 1). As illustrated in FIG. 12, an in-wheel motor drive device 101 includes a motor part 103 configured to generate driving force inside a casing 102 to be mounted on a vehicle body through a suspension device (suspension; not shown), a wheel bearing part 104 to be connected to a wheel, and a speed reduction part 105 configured to reduce a speed of rotation of the motor part 103 to transmit the rotation to the wheel bearing part 104.

In the in-wheel motor drive device 101 having the above-mentioned configuration, a low-torque high-rotation motor is utilized in the motor part 103 from the viewpoint of device compactness. On the other hand, the wheel bearing part 104 requires a large torque for driving the wheel. Therefore, a cycloid reducer capable of obtaining a high speed reduction ratio with a compact size is often utilized.

The speed reduction part 105 in which the cycloid reducer is utilized mainly includes an input shaft 106 of the speed reducer having eccentric parts 106a and 106b, curved plates 107a and 107b arranged at the eccentric parts 106a and 106b, respectively, a plurality of outer periphery engagement members 109 configured to engage with outer peripheral surfaces of the curved plates 107a and 107b to cause rotational motion of the curved plates 107a and 107b, and a plurality of inner pins 111 configured to transmit the rotational motion of the curved plates 107a and 107b to an output shaft 110 of the speed reducer.

The input shaft 106 of the speed reducer is rotatably supported by rolling bearings 112a and 112b in the casing 102 and the output shaft 110 of the speed reducer, and the curved plates 107a and 107b are rotatably supported by rolling bearings 108a and 108b on the input shaft 106 of the speed reducer. Both ends of each of a plurality of outer pins 109 serving as the outer periphery engagement members configured to engage with the outer peripheral surfaces of the curved plates 107a and 107b are rotatably supported by needle roller bearings 113a and 113b with respect to the casing 102. A needle roller bearing 114 is incorporated in the inner pins 111 and comes into rolling contact with the curved plates 107a and 107b.

### PRIOR ART DOCUMENTS

### PATENT DOCUMENTS

Patent Document 1: JP 2008-44537 A

### SUMMARY OF THE INVENTION

### PROBLEMS TO BE SOLVED BY THE INVENTION

Downsizing is an essential requirement of the in-wheel motor drive device 101 for the reasons that the unit has to be accommodated inside the wheel, the unsprung weight needs to be reduced, and moreover, a large passenger compartment space is to be provided. Therefore, a small-sized motor is to be used, and a high rotation speed of 15,000 min⁻¹ or more is required to obtain a necessary output from the small-sized low-torque motor. The rolling bearings incorporated into the speed reduction part 105 still have problems to be improved in association with the severe usage environment as described above, mechanical particularity of the cycloid reducer, and the characteristics of the in-wheel motor drive device serving as the unsprung weight.

The present invention has been proposed in view of the above-mentioned problems and an object of the present invention is to provide a durable in-wheel motor drive device that is small in size and light in weight and has good NVH characteristics.

### SOLUTIONS TO THE PROBLEMS

The present invention is based on the following findings obtained on the rolling bearings incorporated into the speed reduction part as a result of various investigations conducted to achieve the above-mentioned object, including a lubrication mechanism and a cooling mechanism inside the in-wheel motor drive device.
(1) It was found that, when the input shaft of the speed reducer in the speed reduction part was driven by the motor at the high rotation speed as described above, even when the speed reduction part included a lubrication mechanism, the rolling bearings (for example, deep groove ball bearings) configured to support the input shaft of the speed reducer exhibited larger increase in bearing temperature and a larger temperature difference between an inner ring and an outer ring than expected. Under the usage state as described above, as for the bearing clearance of the rolling bearing, the clearance (initial clearance) of the bearing itself is not only reduced by fitting to the output shaft of the speed reducer and the casing or to the input shaft of the speed reducer (assembly clearance) but the clearance is also reduced by the above-mentioned temperature factors. However, when the clearance during driving (hereinafter also referred to as driving clearance) becomes an excessively negative clearance, heat generation occurs, thus leading to early flaking or seizure. The driving clearance as used herein refers to an internal clearance reduced based on expansion of the raceway rings due to the temperature factors and centrifugal force.
(2) On the other hand, in ensuring the clearance to avoid the above-mentioned problems, an excessively large clearance leads to occurrence of vibrations caused by whirling of a rotary member, and noises and vibrations caused by contact at portions where the curved plates are engaged with the outer pins or the inner pins, or the like. It was found that the in-wheel motor drive device including the cycloid reducer was sensitive to the noises and vibrations.
(3) The input shaft of the cycloid reducer is subjected to a significant load from the curved plates each having a wavy outer peripheral surface with which the outer pins are engaged. Further, the input shaft of the speed reducer is in a particular usage state in which the direction and the magnitude of the load vary depending on the phase angle in the rotational direction of the input shaft of the speed reducer. Accordingly, a radial load and a moment load that vary in load direction and load magnitude are applied to the rolling bearings configured to support the input shaft of the speed reducer.
(4) It was found that, in addition to the application state of the loads as described above, a particular condition of the in-wheel motor drive device serving as the unsprung weight was superimposed, thereby being unexpectedly difficult to damp noises and vibrations, thus adversely affecting NVH (noise, vibration, harshness; hereinafter the same) characteristics to provide a feeling of discomfort to a driver and passengers.
(5) It was further found that, unless the rolling bearings themselves configured to support the input shaft of the speed reducer were reduced in size, the rolling bearings were not able to be accommodated within the radial dimensions of the speed reduction part and the motor part, and the device was not able to function as the in-wheel motor drive device.

As a technical measure to achieve the above-mentioned object, according to one embodiment of the present invention, there is provided an in-wheel motor drive device, comprising: a motor part; a speed reduction part; a wheel bearing part; and a casing configured to hold the motor part, the speed reduction part, and the wheel bearing part, the motor part being configured to rotationally drive an input shaft of a speed reducer having eccentric portions, the speed reduction part being configured to reduce a speed of rotation of the input shaft of the speed reducer to transmit the rotation to an output shaft of the speed reducer, the wheel bearing part being connected to the output shaft of the speed reducer, the speed reduction part comprising: the input shaft of the speed reducer; revolving members rotatably held at the eccentric portions of the input shaft of the speed reducer, respectively, and configured to perform revolving motion about a rotation axis of the input shaft of the speed reducer in conjunction with the rotation of the input shaft of the speed reducer; outer periphery engagement members engaged with outer peripheral portions of the revolving members to cause rotational motion of the revolving members; a motion conversion mechanism configured to convert the rotational motion of the revolving members into rotary motion about the rotation axis of the input shaft of the speed reducer to transmit the rotary motion to the output shaft of the speed reducer; and a lubrication mechanism for the speed reduction part, which is configured to supply lubricating oil to the speed reduction part, the input shaft of the speed reducer being rotatably supported by rolling bearings, the rolling bearings configured to support the input shaft of the speed reducer comprising ball bearings each having an initial radial internal clearance (δ) of from 10 µm to 60 µm.

With the configuration described above, it is possible to realize the durable in-wheel motor drive device that is small in size and light in weight and has the good NVH characteristics.

It is preferred that at least one of a raceway ring or a rolling element of each of the ball bearings be formed of a high-carbon chromium bearing steel with increased contents of silicon (Si) and manganese (Mn), and that the high-carbon chromium bearing steel be subjected to through-hardening so as to have a surface layer residual austenite amount of 25% or more. This allows the ball bearings themselves configured to support the input shaft of the speed reducer to be also downsized, thereby being suitable to reduce the size and weight of the in-wheel motor drive device.

The initial radial internal clearance (δ) of the each of the ball bearings is set to from 10 µm to 40 µm, thereby being capable of improving the effect of suppressing noises and vibrations and further improving the NVH characteristics.

The each of the ball bearings is a deep groove ball bearing, thereby being suitable to reduce the size and weight of the in-wheel motor drive device because an allowable limit of the number of rotations can be increased and a low-torque high-rotation motor can be utilized.

### EFFECTS OF THE INVENTION

According to the in-wheel motor drive device of the one embodiment of the present invention, it is possible to realize the durable in-wheel motor drive device that is small in size and light in weight and has the good NVH characteristics.

### BRIEF DESCRIPTION OF DRAWINGS

FIG. 1 is a view for illustrating an in-wheel motor drive device according to an embodiment of the present invention.
FIG. 2 is a transverse sectional view taken along the line O-O of FIG. 1.
FIG. 3 is an enlarged view of a speed reduction part of FIG. 1.
FIG. 4 is a longitudinal sectional view of a ball bearing configured to support an input shaft of a speed reducer in the speed reduction part of FIG. 1.
FIG. 5 is an explanatory view for illustrating a load acting on a curved plate of FIG. 1.
FIG. 6 is a transverse sectional view taken along the line P-P of FIG. 1.
FIG. 7 is a transverse sectional view taken along the line Q-Q of FIG. 1.
FIG. 8 is a transverse sectional view taken along the line R-R of FIG. 1.
FIG. 9 is a transverse sectional view of a rotary pump of FIG. 1.
FIG. 10 is a plan view of an electric vehicle on which the in-wheel motor drive devices of FIG. 1 are mounted.
FIG. 11 is a cross-sectional view of the electric vehicle when viewed from behind of FIG. 10.

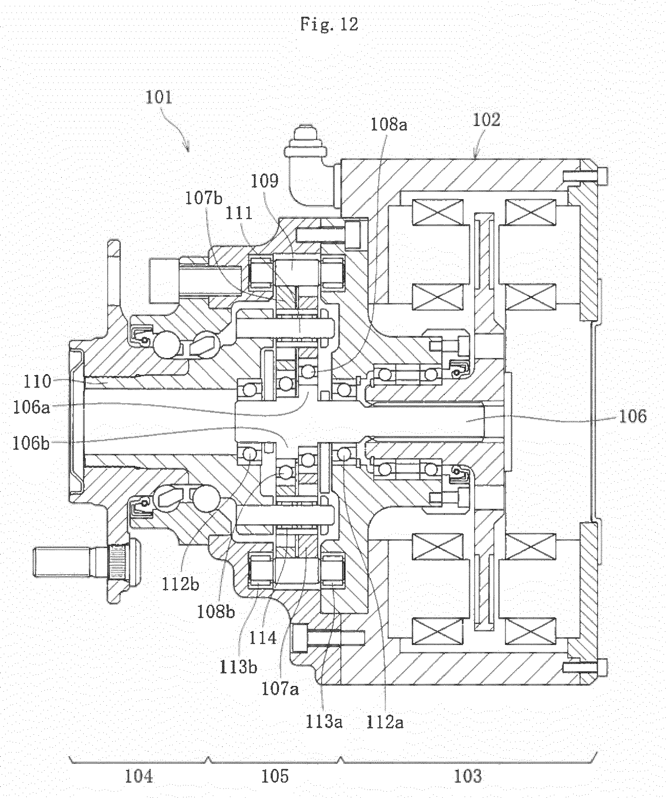

FIG. 12 is a view for illustrating the related-art in-wheel motor drive device.

### EMBODIMENTS OF THE INVENTION

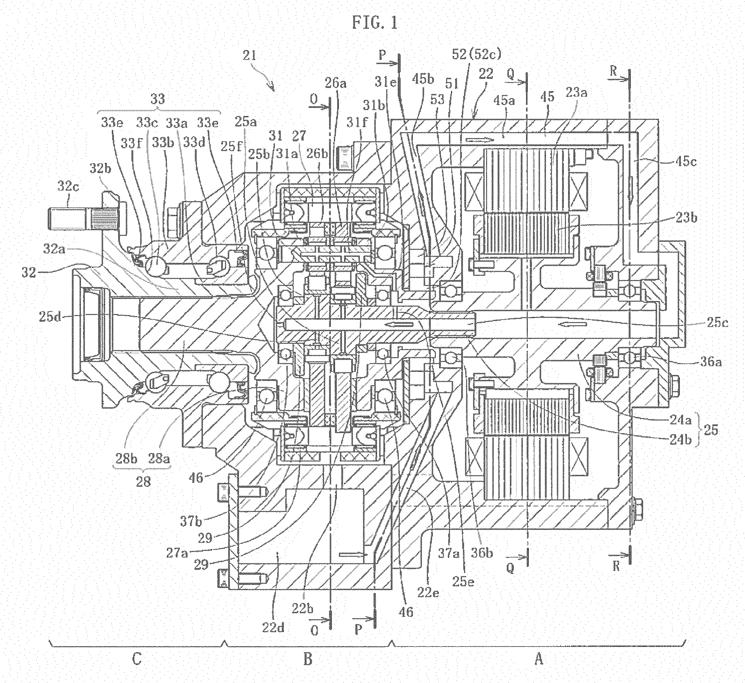

An in-wheel motor drive device according to an embodiment of the present invention is described with reference to FIG. 1 to FIG. 11.

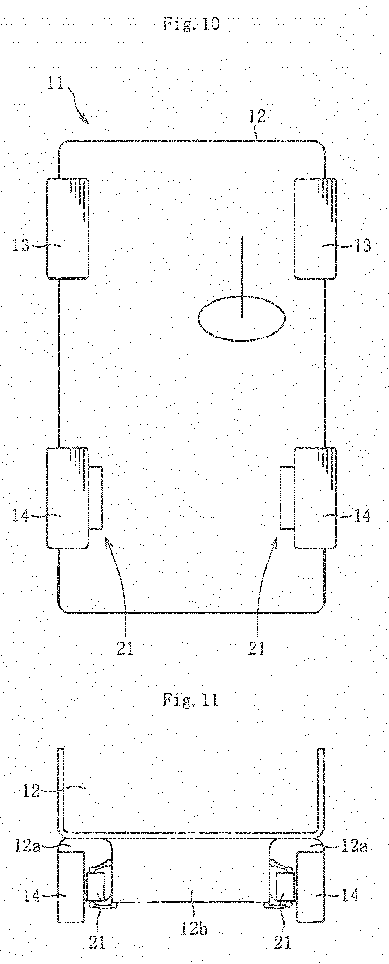

FIG. 10 is a schematic plan view of an electric vehicle 11 on which in-wheel motor drive devices 21 according to an embodiment of the present invention are mounted, and FIG. 11 is a schematic cross-sectional view of the electric vehicle when viewed from behind. As illustrated in FIG. 10, the electric vehicle 11 comprises a chassis 12, front wheels 13 serving as steered wheels, rear wheels 14 serving as driving wheels, and the in-wheel motor drive devices 21 configured to transmit driving force to the right and left rear wheels 14, respectively. As illustrated in FIG. 11, each rear wheel 14 is accommodated inside a wheel housing 12a of the chassis 12 and fixed below the chassis 12 through a suspension device (suspension) 12b.

In the suspension device 12b, a horizontally extending suspension arm supports the rear wheels 14, and a strut comprising a coil spring and a shock absorber absorbs vibrations that each rear wheel 14 receives from the ground to suppress vibrations of the chassis 12. In addition, a stabilizer configured to suppress tilting of a vehicle body during turning and the like is provided at connecting portions of the right and left suspension arms. In order to improve the property of following irregularities of a road surface to transmit the driving force of the driving wheels to the road surface efficiently, the suspension device 12b is desirably an independent suspension type capable of independently moving the right and left wheels up and down.

The electric vehicle 11 need not comprise a motor, a drive shaft, a differential gear mechanism, and the like on the chassis 12 because the in-wheel motor drive devices 21 configured to drive the right and left rear wheels 14, respectively, are arranged inside the wheel housings 12a. Accordingly, the electric vehicle 11 has the advantages in that a large passenger compartment space can be provided and rotation of the right and left driving wheels can be controlled, respectively.

It is necessary to reduce the unsprung weight in order to improve the driving stability and the NVH characteristics of the electric vehicle 11. In addition, the in-wheel motor drive device 21 is required to be downsized to provide a larger passenger compartment space. To this end, the in-wheel motor drive device 21 according to the embodiment of the present invention is utilized as illustrated in FIG. 1.

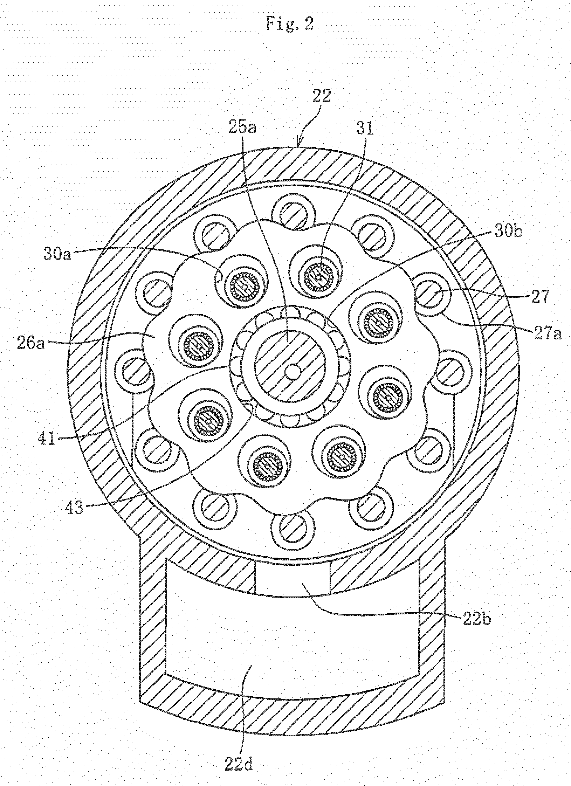

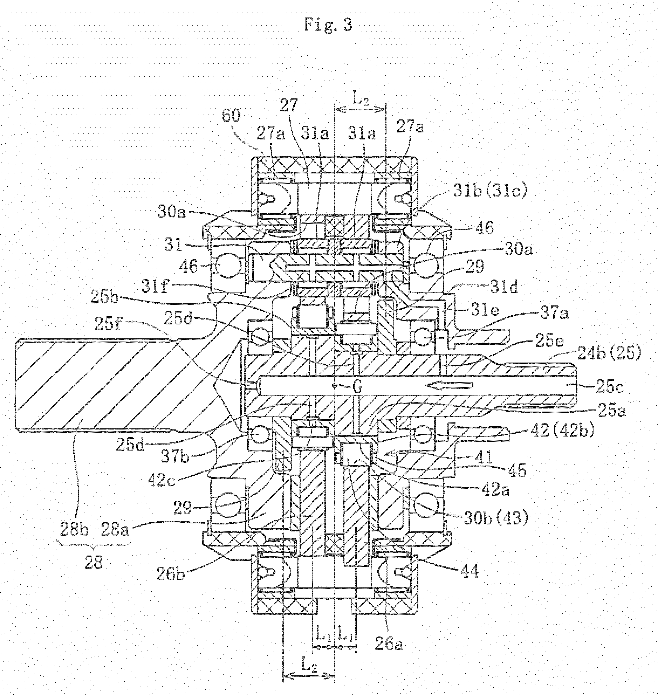

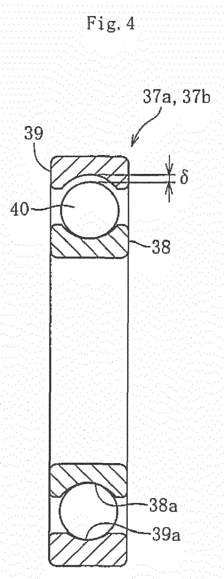

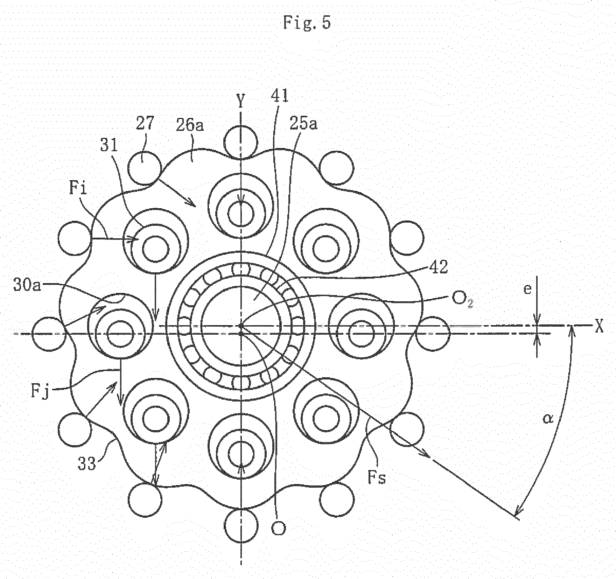

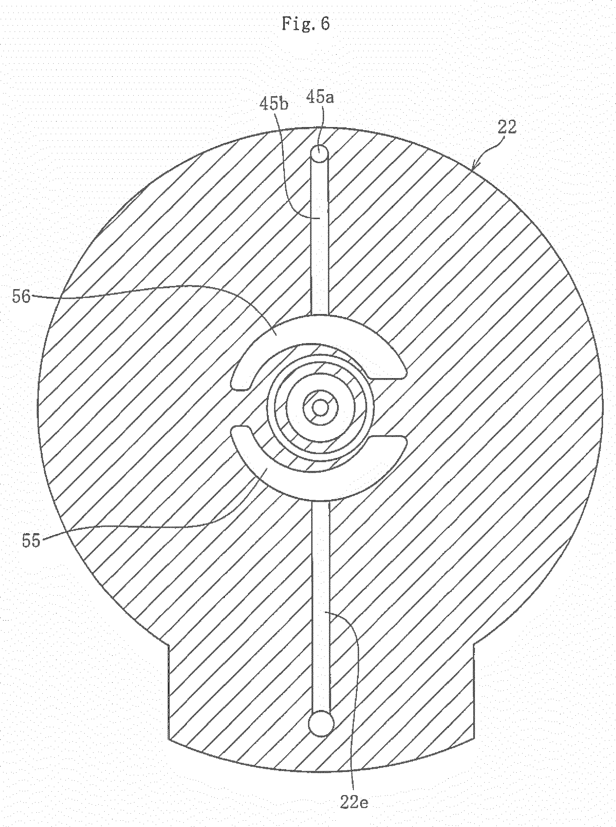

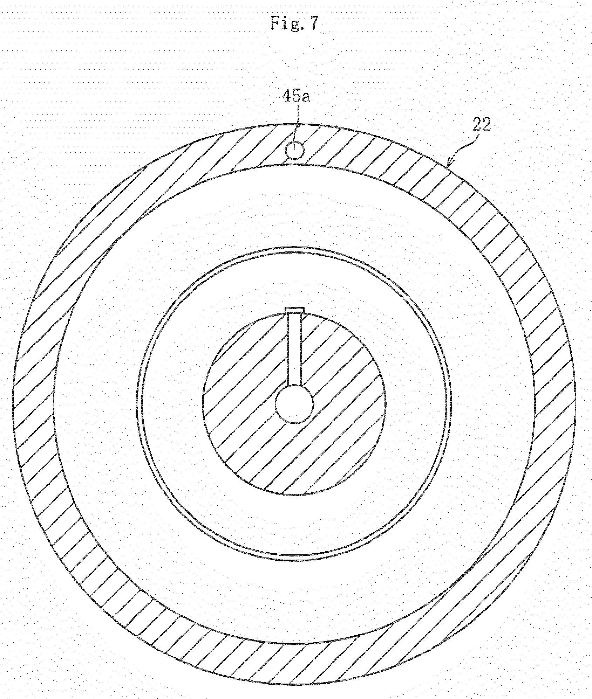

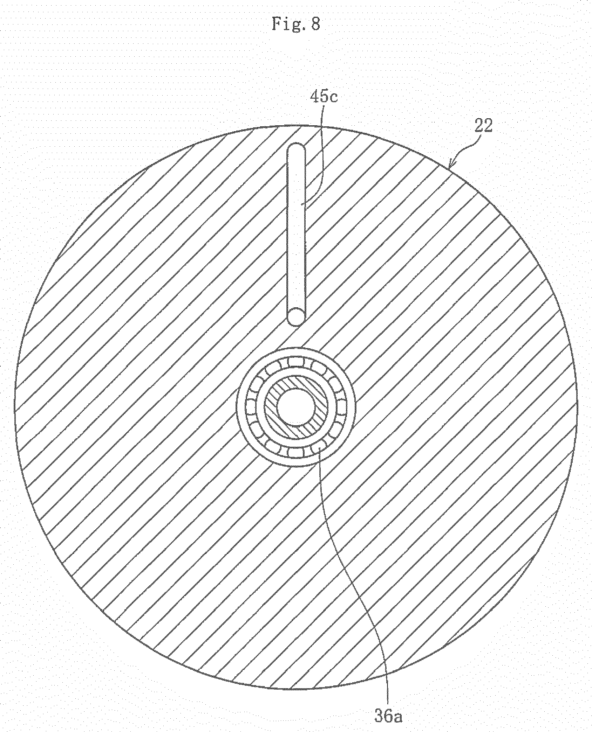

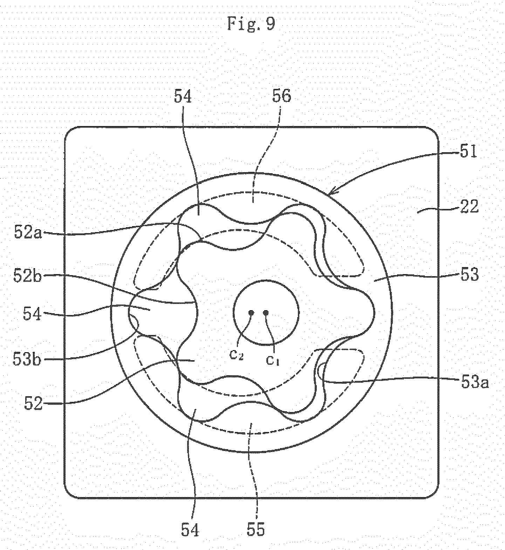

The in-wheel motor drive device 21 according to the embodiment of the present invention is described with reference to FIG. 1 to FIG. 9. FIG. 1 is a schematic longitudinal sectional view of the in-wheel motor drive device 21. FIG. 2 is a transverse sectional view taken along the line O-O of FIG. 1. FIG. 3 is an enlarged view of a speed reduction part. FIG. 4 is a longitudinal sectional view of a ball bearing configured to support an input shaft of a speed reducer in the speed reduction part. FIG. 5 is an explanatory view for illustrating a load acting on a curved plate. FIG. 6 is a transverse sectional view taken along the line P-P of FIG. 1. FIG. 7 is a transverse sectional view taken along the line Q-Q of FIG. 1. FIG. 8 is a transverse sectional view taken along the line R-R of FIG. 1. FIG. 9 is a transverse sectional view of a rotary pump.

As illustrated in FIG. 1, the in-wheel motor drive device 21 comprises a motor part A configured to generate driving force, a speed reduction part B configured to reduce a speed of rotation of the motor part A and output the rotation, and a wheel bearing part C configured to transmit the output from the speed reduction part B to the driving wheel 14. The motor part A and the speed reduction part B are accommodated in a casing 22 and mounted inside the wheel housing 12a of the electric vehicle 11 as illustrated in FIG. 11.

The motor part A is a radial gap motor comprising a stator 23a fixed to the casing 22, a rotor 23b arranged inside the stator 23a at an opposed position with a radial gap, and a rotation shaft 24a of the motor, which is connected and fixed to the inside of the rotor 23b so as to rotate integrally with the rotor 23b.

The rotation shaft 24a of the motor having a hollow structure is fitted and fixed to the radially inner surface of the rotor 23b to rotate integrally and is rotatably supported by a rolling bearing 36a at one end on one side in its axial direction (right side in FIG. 1) and by a rolling bearing 36b at one end on the other side in the axial direction (left side in FIG. 1) inside the motor part A.

An input shaft 25 of the speed reducer is rotatably supported by a rolling bearing 37a at an approximately central portion on one side in its axial direction (right side in FIG. 1) and by a rolling bearing 37b at one end on the other side in the axial direction (left side in FIG. 1) with respect to an output shaft 28 of the speed reducer. The input shaft 25 of the speed reducer has eccentric portions 25a and 25b inside the speed reduction part B. The two eccentric portions 25a and 25b are arranged with a 180° phase shift to mutually cancel out centrifugal force caused by eccentric motion. The characteristic configuration of the in-wheel motor drive device 21 according to this embodiment resides in the rolling bearings 37a and 37b configured to support the input shaft 25 of the speed reducer, and details thereof are described later.

The rotation shaft 24a of the motor and the input shaft 25 of the speed reducer are connected to each other by serration fitting, and the driving force of the motor part A is transmitted to the speed reduction part B. The serration fitting portion is configured to suppress influences on the rotation shaft 24a of the motor even when the input shaft 25 of the speed reducer inclines to some extent.

The speed reduction part B comprises curved plates 26a and 26b serving as revolving members rotatably held at the eccentric portions 25a and 25b, a plurality of outer pins 27 being held at fixed positions on the casing 22 and serving as outer periphery engagement members configured to engage with outer peripheral portions of the curved plates 26a and 26b, a motion conversion mechanism configured to transmit rotational motion of the curved plates 26a and 26b to the output shaft 28 of the speed reducer, and a counterweight 29 arranged at a position adjacent to the eccentric portions 25a and 25b. The speed reduction part B also comprises a lubrication mechanism for the speed reduction part, which is configured to supply lubricating oil to the speed reduction part B. The lubrication mechanism for the speed reduction part is described later in detail.

The output shaft 28 of the speed reducer has a flange portion 28a and a shaft portion 28b. At the end surface of the flange portion 28a, holes for fixing inner pins 31 are formed at equal intervals on the circumference about the rotation axis of the output shaft 28 of the speed reducer. The shaft portion 28b is fitted and connected to a hub wheel 32 to transmit the output from the speed reduction part B to the wheel 14.

As illustrated in FIG. 2, the curved plate 26a has a plurality of wave patterns formed of trochoidal curves such as epitrochoidal curves in the outer periphery portion, and a plurality of through-holes 30a and 30b extending from one-side end surface to the other-side end surface. The plurality of through-holes 30a are formed at equal intervals on the circumference about the rotation axis of the curved plate 26a and are configured to receive the inner pins 31 to be described later. The through-hole 30b is formed at the center of the curved plate 26a, and the eccentric portion 25a is fitted thereinto.

The curved plate 26a is rotatably supported by a rolling bearing 41 with respect to the eccentric portion 25a. As illustrated in FIG. 2 and FIG. 3, the rolling bearing 41 is a cylindrical roller bearing comprising an inner ring 42 being fitted onto the radially outer surface of the eccentric portion 25a and having an inner raceway surface 42a on the radially outer surface, an outer raceway surface 43 directly formed at the radially inner surface of the through-hole 30b of the curved plate 26a, a plurality of cylindrical rollers 44 arranged between the inner raceway surface 42a and the outer raceway surface 43, and a cage 45 configured to retain the cylindrical rollers 44. The inner ring 42 has a flange portion 42b projecting in a radially outward direction from both ends in the axial direction of the inner raceway surface 42a. In the rolling bearing 41 described above, the inner ring 42 is separately formed. However, the rolling bearing is not limited to this, and the inner raceway surface may be directly formed at the radially outer surface of the eccentric portion 25a in the same manner as the outer raceway surface 43. Although not shown, the curved plate 26b is the same as the curved plate 26a.

As illustrated in FIG. 2 and FIG. 3, the outer pins 27 are provided at equal intervals on the circumference about the rotation axis of the input shaft 25 of the speed reducer. As a result of revolving motion of the curved plates 26a and 26b, curved wave patterns are engaged with the outer pins 27 to cause rotational motion of the curved plates 26a and 26b. Each outer pin 27 is rotatably supported by a needle roller bearing 27a with respect to the casing 22 (see FIG. 1). The resistance of contact with the curved plates 26a and 26b can be therefore reduced. In the example illustrated in FIG. 1, each outer pin 27 is rotatably held in an outer pin housing 60 through the needle roller bearing 27a, and the outer pin housing 60 is mounted to the casing 22 under a retained state (not shown). The outer pins 27 are not limited to this type and may be configured to be directly held in the casing 22 through the needle roller bearing 27a. In both the cases, the outer pins 27 are rotatably supported with respect to the casing 22.

The counterweight 29 has an approximately fan shape, has a through-hole into which the input shaft 25 of the speed reducer is fitted, and is arranged at a position adjacent to each of the eccentric portions 25a and 25b with a 180° phase shift with respect to the eccentric portions 25a and 25b in order to cancel out unbalanced inertia couple caused by the rotation of the curved plates 26a and 26b.

As illustrated in FIG. 3, when the central point, which is positioned on the rotation axis and between the two curved plates 26a and 26b, is denoted by G, a relationship of L₁×m₁×=L₂×m₂×ε₂ is satisfied on the right side of the central point G in FIG. 3, where L₁ is the distance between the central point G and the center of the curved plate 26a, m₁ is the sum of the mass of the curved plate 26a, the mass of the rolling bearing 41, and the mass of the eccentric portion 25a, ε₁ is the amount of eccentricity of the center of gravity of the curved plate 26a from the rotation axis, L₂ is the distance in the rotation axis direction between the central point G and the center of gravity of the counterweight 29, m₂ is the mass of the counterweight 29, and ε₂ is the amount of eccentricity of the center of gravity of the counterweight 29 from the rotation axis. Note that, the relationship of L₁×m₁×ε₁=L₂×m₂×ε₂ allows for inevitably occurring errors. The same relationship is established between the curved plate 26b and the counterweight 29 on the left side of the central point G in FIG. 3.

The motion conversion mechanism comprises the plurality of inner pins 31 held on the output shaft 28 of the speed reducer and the through-holes 30a formed in the curved plates 26a and 26b. The inner pins 31 are provided at equal intervals on the circumference about the rotation axis of the output shaft 28 of the speed reducer, and their ends on one side in the axial direction are fixed to the output shaft 28 of the speed reducer. The output shaft 28 of the speed reducer and the input shaft 25 of the speed reducer are coaxially arranged, and hence the rotational motion of the curved plates 26a and 26b is converted into rotary motion about the rotation axis of the input shaft 25 of the speed reducer and transmitted to the output shaft 28 of the speed reducer. In order to reduce the resistance of friction against the curved plates 26a and 26b, a needle roller bearing 31a is provided at a position of contact with the inner wall surfaces of the through-holes 30a in the curved plates 26a and 26b.

A stabilizer 31b is provided at ends in the axial direction of the inner pins 31. The stabilizer 31b comprises an annular portion 31c having a circular ring shape and a cylindrical portion 31d extending axially from the radially inner surface of the annular portion 31c. The ends on the other side in the axial direction of the plurality of inner pins 31 are fixed to the annular portion 31c. The load applied to some of the inner pins 31 from the curved plates 26a and 26b is supported by all the inner pins 31 through the stabilizer 31b. Therefore, the stress acting on the inner pins 31 can be reduced to improve the durability.

The through-holes 30a are formed at positions corresponding to the plurality of inner pins 31, and the inner diameter dimension of each through-hole 30a is set to be larger by a predetermined dimension than the outer diameter dimension (corresponding to "maximum outer diameter including the needle roller bearing 31a"; hereinafter the same) of each inner pin 31.

As illustrated in FIG. 1, the wheel bearing part C comprises the hub wheel 32 connected to the output shaft 28 of the speed reducer and a wheel bearing 33 configured to rotatably support the hub wheel 32 with respect to the casing 22. The hub wheel 32 has a hollow portion 32a having a cylindrical shape and a flange portion 32b. The driving wheel 14 is connected and fixed to the flange portion 32b through bolts 32c. The radially outer surface of the shaft portion 28b of the output shaft 28 of the speed reducer is splined and the spline is fitted to a spline hole formed at the radially inner surface of the hollow portion 32a of the hub wheel 32 so that the output shaft of the speed reducer is connected to the hub wheel in a torque-transmittable manner.

The wheel bearing 33 is a double-row angular contact ball bearing comprising an inner bearing member formed of an inner raceway surface 33f directly formed at the radially outer surface of the hub wheel 32 and an inner ring 33a fitted onto a small-diameter step portion at the radially outer surface, an outer ring 33b fitted and fixed to the radially inner surface of the casing 22, a plurality of balls 33c serving as rolling elements arranged between the inner raceway surface 33f, the inner ring 33a, and the outer ring 33b, a cage 33d configured to keep the interval between the adjacent balls 33c, and a sealing member 33e configured to seal both ends in the axial direction of the wheel bearing 33.

Next, the lubrication mechanism for the speed reduction part is described. The lubrication mechanism for the speed reduction part is configured to supply lubricating oil to the speed reduction part B and mainly comprises a lubricating oil path 25c, lubricating oil supply ports 25d, 25e, and 25f, a lubricating oil path 31e inside the stabilizer 31b, a lubricating oil path 31f inside the inner pins 31, a lubricating oil discharge port 22b, a lubricating oil reservoir 22d, a lubricating oil path 22e, a rotary pump 51, and a circulation oil path 45 as illustrated in FIG. 1 and FIG. 3. The outline arrows in the lubrication mechanism for the speed reduction part indicate directions of lubricating oil flow.

The lubricating oil path 25c extends along the axial direction inside the input shaft 25 of the speed reducer. The lubricating oil supply ports 25d and 25e extend from the lubricating oil path 25c toward the radially outer surface of the input shaft 25 of the speed reducer, and the lubricating oil supply port 25f extends from an axial end of the input shaft 25 of the speed reducer in a rotation axis direction toward an axial end surface.

The lubricating oil discharge port 22b from which lubricating oil inside the speed reduction part B is discharged is formed at least at one location of the casing 22 at the position of the speed reduction part B. The circulation oil path 45 connecting the lubricating oil discharge port 22b with the lubricating oil path 25c is formed inside the casing 22. The lubricating oil discharged from the lubricating oil discharge port 22b flows through the circulation oil path 45 and returns to the lubricating oil path 25c.

As illustrated in FIG, 1 and FIG. 6 to FIG. 8, the circulation oil path 45 comprises an axial oil path 45a axially extending inside the casing 22, a radial oil path 45c being connected to one end (right side in FIG. 1) in the axial direction of the axial oil path 45a and extending in the radial direction, and a radial oil path 45b being connected to the other end (left side in FIG. 1) in the axial direction of the axial oil path 45a and extending in the radial direction.

The radial oil path 45b supplies lubricating oil pumped out of the rotary pump 51 to the axial oil path 45a and supplies the lubricating oil from the axial oil path 45a to the lubricating oil path 25c through the radial oil path 45c.

The rotary pump 51 is provided between the lubricating oil path 22e connected to the lubricating oil reservoir 22d and the circulation oil path 45 to circulate the lubricating oil in a forced manner. As illustrated in FIG. 9, the rotary pump 51 is a cycloid pump comprising an inner rotor 52 configured to rotate using the rotation of the output shaft 28 of the speed reducer (see FIG. 1), an outer rotor 53 configured to be driven to rotate in conjunction with the rotation of the inner rotor 52, pump chambers 54, a suction port 55 communicating with the lubricating oil path 22e, and a discharge port 56 communicating with the radial oil path 45b of the circulation oil path 45.

The radially outer surface of the inner rotor 52 has a tooth profile formed of cycloid curves. To be more specific, each tooth tip portion 52a has an epicycloid curve shape and each tooth groove portion 52b has a hypocycloid curve shape. The inner rotor 52 is fitted to the radially outer surface of the cylindrical portion 31d (see FIG. 1 and FIG. 3) of the stabilizer 31b to rotate integrally with the inner pins 31 (output shaft 28 of the speed reducer).

The radially inner surface of the outer rotor 53 has a tooth profile formed of cycloid curves. To be more specific, each tooth tip portion 53a has a hypocycloid curve shape and each tooth groove portion 53b has an epicycloid curve shape. The outer rotor 53 is rotatably supported in the casing 22.

The inner rotor 52 rotates about a rotation center c₁. On the other hand, the outer rotor 53 rotates about a rotation center c₂ that is different from the rotation center c₁ of the inner rotor 52. When the number of teeth of the inner rotor 52 is represented by n, the outer rotor 53 has (n+1) teeth. In this embodiment, n is 5.

The plurality of pump chambers 54 are formed in a space between the inner rotor 52 and the outer rotor 53. As the inner rotor 52 rotates using the rotation of the output shaft 28 of the speed reducer, the outer rotor 53 is driven to rotate. The inner rotor 52 and the outer rotor 53 rotate about the different rotation centers c₁ and c₂ in this process, and hence the volume of each pump chamber 54 changes continuously. Thus, the lubricating oil entering from the suction port 55 is pumped out of the discharge port 56 to the radial oil path 45b.

When the inner rotor 52 inclines during the rotation of the rotary pump 51 having the above-mentioned configuration, the volume of each pump chamber 54 changes, which may hinder proper pumping out of lubricating oil or bring the inner rotor 52 and the outer rotor 53 into contact with each other to cause breakage. Therefore, the inner rotor 52 comprises a stepped portion 52c as illustrated in FIG. 1. The stepped portion 52c prevents the radially outer surface (guide surface) from coming into contact with the radially inner surface of the casing 22 to cause the inner rotor 52 to incline due to the radial load from the wheel 14.

The lubricating oil reservoir 22d configured to temporarily store the lubricating oil is provided between the lubricating oil discharge port 22b and the rotary pump 51. During high-speed rotation, the lubricating oil that cannot be discharged by the rotary pump 51 can be therefore temporarily stored in the lubricating oil reservoir 22d. As a result, the torque loss in the speed reduction part B can be prevented from increasing. On the other hand, during low-speed rotation, even when the amount of lubricating oil reaching the lubricating oil discharge port 22b is reduced, the lubricating oil stored in the lubricating oil reservoir 22d can be returned to the lubricating oil path 25c. As a result, the lubricating oil can be stably supplied to the speed reduction part B.

In addition to centrifugal force, gravity moves the lubricating oil inside the speed reduction part B outside. Therefore, the lubricating oil reservoir 22d is desirably mounted on the electric vehicle 11 so as to be located below the in-wheel motor drive device 21.

The flow of the lubricating oil in the speed reduction part B having the above-mentioned configuration is described. First, the lubricating oil flowing in the lubricating oil path 25c flows into the speed reduction part B from the lubricating oil supply ports 25d, 25e, and 25f under centrifugal force and pressure caused by the rotation of the input shaft 25 of the speed reducer. Then, the lubricating oil flows to the respective rolling bearings inside the speed reduction part B as described below.

The lubricating oil flowing out of the lubricating oil supply ports 25e and 25f is supplied under the action of centrifugal force to the rolling bearings (deep groove ball bearings) 37a and 37b configured to support the input shaft 25 of the speed reducer. Then, the lubricating oil flowing out of the lubricating oil supply port 25e is guided to the lubricating oil path 31e inside the stabilizer 31b to reach the lubricating oil path 31f inside the inner pins 31 so that the lubricating oil is supplied from the lubricating oil path 31 to the needle roller bearing 31a. Then, the lubricating oil moves in a radially outward direction under centrifugal force while lubricating portions of contact between the curved plates 26a and 26b and the inner pins 31, portions of contact between the curved plates 26a and 26b and the outer pins 27, the needle roller bearing 27a configured to support the outer pins 27, a rolling bearing 46 configured to support the output shaft 28 of the speed reducer (stabilizer 31b), and the like.

On the other hand, the lubricating oil flowing out of the lubricating oil supply port 25d is supplied into the bearing from a supply hole 42c (see FIG. 3) formed in the inner ring 42 of the rolling bearing (cylindrical roller bearing) 41 configured to support the curved plates 26a and 26b. The cylindrical rollers 44, the inner raceway surface 42a, and the outer raceway surface 43 are therefore lubricated. Then, in the same manner as the lubricating oil flowing out of the lubricating oil supply ports 25e and 25f, the lubricating oil moves in a radially outward direction under centrifugal force while lubricating portions of contact between the curved plates 26a and 26b and the inner pins 31, portions of contact between the curved plates 26a and 26b and the outer pins 27, and the like.

The respective rolling bearings inside the speed reduction part B are lubricated by the lubricating oil flow as described above. The lubricating oil having reached the inner wall surface of the casing 22 is discharged from the lubricating oil discharge port 22b to be stored in the lubricating oil reservoir 22d. The lubricating oil stored in the lubricating oil reservoir 22d is supplied from the suction port 55 to the rotary pump 51 through the lubricating oil path 22e and pumped out through the discharge port 56 to the circulation oil path 45. The lubricating oil therefore returns to the lubricating oil path 25c from the radial oil path 45b of the circulation oil path 45 through the axial oil path 45a and the radial oil path 45c.

The amount of lubricating oil discharged from the lubricating oil discharge port 22b increases in proportion to the number of rotations of the input shaft 25 of the speed reducer. On the other hand, the inner rotor 52 rotates integrally with the output shaft 28 of the speed reducer, and hence the amount of discharge from the rotary pump 51 increases in proportion to the number of rotations of the output shaft 28 of the speed reducer. Further, the amount of lubricating oil supplied from the lubricating oil discharge port 22b to the speed reduction part B increases in proportion to the amount of discharge from the rotary pump 51. In other words, both the amount of lubricating oil supplied to the speed reduction part B and the amount of lubricating oil discharged therefrom vary depending on the number of rotations of the in-wheel motor drive device 21, and hence the lubricating oil can be circulated smoothly at all times.

A part of the lubricating oil flowing in the circulation oil path 45 lubricates the rolling bearing 36a from a portion between the casing 22 and the rotation shaft 24a of the motor. The rolling bearing 36b is lubricated by lubricating oil from a portion between the stepped portion 52c of the rotary pump 51 and the casing 22.

The lack of lubricating oil on the periphery of the input shaft 25 of the speed reducer can be solved by supplying lubricating oil from the input shaft 25 of the speed reducer to the speed reduction part B as described above. In addition, the torque loss in the speed reduction part B can be reduced by suppressing the stirring resistance through forced discharge of the lubricating oil using the rotary pump 51. Moreover, increase in size of the overall in-wheel motor drive device 21 can be prevented by arranging the rotary pump 51 inside the casing 22.

The speed reduction part B comprises the above-mentioned lubrication mechanism for the speed reduction part but the respective rolling bearings inside the speed reduction part B are in a very severe usage environment. Nevertheless, in this embodiment, the deep groove ball bearings 37a and 37b serving as rolling bearings configured to support the input shaft 25 of the speed reducer in the speed reduction part B have a characteristic configuration.

As illustrated in FIG. 1, FIG. 3, and FIG. 4, the deep groove ball bearings 37a and 37b are incorporated into the output shaft 28 of the speed reducer. To be more specific, one deep groove ball bearing 37a is fitted to the radially inner surface of the cylindrical portion 31d of the stabilizer 31b connected and fixed to one axial end of each of the inner pins 31 fixed to the output shaft 28 of the speed reducer. The other deep groove ball bearing 37b is fitted to the radially inner surface of the flange portion 28a of the output shaft 28 of the speed reducer. The deep groove ball bearing 37a supports the approximately central portion on one side in the axial direction (right side in FIG. 1) of the input shaft 25 of the speed reducer, and the deep groove ball bearing 37b supports one end on the other side in the axial direction (left side in FIG. 1) of the input shaft 25 of the speed reducer. Each of the deep groove ball bearings 37a and 37b comprises an outer ring 39, an inner ring 38, balls 40 serving as rolling elements, and a cage (not shown). As described above, the deep groove ball bearings 37a and 37b can have a higher allowable limit in the number of rotations and are suitable to low-torque high-rotation motors.

The input shaft 25 of the speed reducer is directly connected to the rotation shaft 24a of the motor, and the deep groove ball bearings 37a and 37b are rotated at a speed as high as about 15,000 min⁻¹. In addition to this high-speed rotation, the input shaft 25 of the speed reducer is subjected to a significant load from the curved plates 26a and 26b each having the wavy outer peripheral surface with which the outer pins 27 are engaged. Further, the input shaft 25 of the speed reducer is in a particular usage state in which the direction and magnitude of the load vary depending on the phase angle in the rotational direction of the input shaft 25 of the speed reducer. Next, the details thereof are described.

The state of the load acting on the curved plates 26a and 26b is described with reference to FIG. 5. The axial center O₂ of the eccentric portion 25a is eccentric with respect to the axial center O of the input shaft 25 of the speed reducer by an amount of eccentricity e. The curved plate 26a is mounted to the outer periphery of the eccentric portion 25a, and the eccentric portion 25a rotatably supports the curved plate 26a. Accordingly, the axial center O₂ is also an axial center of the curved plate 26a. The outer periphery of the curved plate 26a is formed of a wavy curve, and the curved plate 26a has radially concave and wavy recesses 33 equiangularly. On the periphery of the curved plate 26a, the plurality of outer pins 27 configured to engage with the recesses 33 are arranged in the circumferential direction about the axial center O.

In FIG. 5, when the eccentric portion 25a rotates in a counterclockwise direction on the drawing sheet together with the input shaft 25 of the speed reducer, the eccentric portion 25a revolves about the axial center O. Therefore, the recesses 33 of the curved plate 26a successively come into circumferential contact with the outer pins 27. As a result, as indicated by the arrows, the curved plate 26a is subjected to a load Fi from the plurality of outer pins 27 to rotate in a clockwise direction.

The curved plate 26a has the plurality of through-holes 30a formed in the circumferential direction about the axial center O₂. The inner pin 31 configured to be joined to the output shaft 28 of the speed reducer, which is arranged coaxially with the axial center O, is inserted through each through-hole 30a. The inner diameter of the through-holes 30a is larger by a predetermined dimension than the outer diameter of the inner pins 31, and hence the inner pins 31 do not impede the revolving motion of the curved plate 26a, and the inner pins 31 utilize the rotational motion of the curved plate 26a to rotate the output shaft 28 of the speed reducer. Then, the output shaft 28 of the speed reducer has a higher torque and a lower number of rotations than the input shaft 25 of the speed reducer, and the curved plate 26a is subjected to a load Fj from the plurality of inner pins 31, as indicated by the arrows in FIG. 5. A resultant force Fs of the plurality of loads Fi and Fj is applied to the input shaft 25 of the speed reducer.

The direction of the resultant force Fs varies depending on the geometric conditions such as the wavy shape of the curved plate 26a and the number of the recesses 33, and the effect of centrifugal force. To be more specific, the angle a formed between the resultant force Fs and a reference line X that is orthogonal to a line Y connecting the rotation axial center O₂ and the axial center O and passes through the rotation axial center O₂ varies in a range of from approximately 30° to approximately 60°.

The above-mentioned plurality of loads Fi and Fj vary in load direction and load magnitude during one rotation (360°) of the input shaft 25 of the speed reducer, and as a result, the resultant force Fs acting on the input shaft 25 of the speed reducer also varies in load direction and load magnitude. Further, one rotation of the input shaft 25 of the speed reducer causes speed reduction of the wavy recesses 33 of the curved plate 26a to rotate the curved plate 26a by one pitch in the clockwise direction to be brought into the state in FIG. 5, and this process is repeated.

Accordingly, in addition to high-speed rotation, the deep groove ball bearings 37a and 37b configured to support the input shaft 25 of the speed reducer are subjected to a radial load and a moment load that vary in load direction and load magnitude. As a result, it was verified that increase in bearing temperature and a temperature difference between the inner ring and the outer ring of the bearing were larger than expected. In order to deal with this, verification was conducted on the phenomenon that, even in a case where the initial radial internal clearance δ of the deep groove ball bearings 37a and 37b was set in consideration of fitting of the deep groove ball bearings 37a and 37b to the output shaft 28 of the speed reducer and the stabilizer 31b or fitting of the deep groove ball bearings 37a and 37b to the input shaft 25 of the speed reducer, when the amount of the initial radial internal clearance δ was slightly small, the radial internal clearance became a negative clearance during driving to cause heat generation, thus leading to early flaking or seizure.

On the other hand, it was found that increase in the amount of the initial radial internal clearance δ of the deep groove ball bearings 37a and 37b to avoid the above-mentioned problem led to occurrence of vibrations caused by whirling of a rotary member inside the speed reduction part B, and noises and vibrations caused by contact at portions where the curved plates 26a and 26b were engaged with the outer pins 27 or the inner pins 31, or the like, and that the in-wheel motor drive device 21 comprising the cycloid reducer was sensitive to those noises and vibrations.

It was also verified that a particular condition of the in-wheel motor drive device 21 serving as the unsprung weight was superimposed on the above-mentioned noises and vibrations, thereby being unexpectedly difficult to damp the noises and vibrations, thus adversely affecting the NVH characteristics to provide a feeling of discomfort to a driver and passengers.

As described above, the deep groove ball bearings 37a and 37b configured to support the input shaft 25 of the speed reducer in the in-wheel motor drive device 21 according to this embodiment are in a severe usage environment in which various factors are involved, and in view of the usage environment, experiments and evaluations were carried out to pursue a range in which the radial internal clearance was able to be processed. The results are shown in Table 1.

**[Table 1]**

| Evaluation item | Initial clearance (µm) | | | | | | | | | | |
|---|---|---|---|---|---|---|---|---|---|---|---|
| | -20 | -10 | 0 | 10 | 20 | 30 | 40 | 50 | 60 | 70 | 80 |
| | ○ | ○ | ○ | ○ | ○ | ○ | ○ | Δ | Δ | × | × |
| Presence or absence of positive clearance in assembly in consideration of temperature increase and temperature difference between inner ring and outer ring | No | No | No | Yes | Yes | Yes | Yes | Yes | Yes | Yes | Yes |
| Bearing life | × | × | ○ | ○ | ○ | ○ | ○ | ○ | ○ | ○ | ○ |

Evaluation criteria in Table 1 are as follows.

### [Noise and Vibration]

The noise level is measured by a noise meter under a simulated state in which a passenger is sitting in a back seat.
○: State in which most of passengers have no feeling of discomfort due to noises or passengers have no feeling of discomfort under most of conditions
Δ: State in which only sensitive passengers have a feeling of discomfort due to noises or passengers have a feeling of discomfort only under specific conditions x: State in which most of passengers have a feeling of discomfort due to noises

### [Bearing Life]

o: Reference vehicle life of 10 years or 100,000 km is achievable
x: Such reference vehicle life is unachievable

Based on the above-mentioned experimental results, it was verified that, by setting the initial radial internal clearance δ of the deep groove ball bearings 37a and 37b in the speed reduction part B of the in-wheel motor drive device 21 comprising the lubrication mechanism for the speed reduction part to from 10 µm to 60 µm, heat generation and seizure were able to be prevented even under conditions such as fitting to the output shaft 28 of the speed reducer and the input shaft 25 of the speed reducer, increase in temperature, and increase in temperature difference between the inner ring and the outer ring, and effects of noises and vibrations and decrease in the NVH characteristics caused thereby were able to be suppressed to the lowest possible level within a range in which processing was possible. In this way, an in-wheel motor drive device in which noises and vibrations are suppressed and the NVH characteristics are excellent can be realized in spite of the particular condition of the in-wheel motor drive device and the cycloid reducer serving as the unsprung weight. It was also verified that the initial radial internal clearance δ of from 10 µm to 40 µm was more preferred.

The initial radial internal clearance δ as used herein refers to an amount of movement when the inner ring 38 or the outer ring 39 is fixed and the unfixed raceway ring is radially moved as illustrated in FIG. 4 under a state before being assembled to the output shaft 28 of the speed reducer and the input shaft 25 of the speed reducer. In other words, the initial radial internal clearance δ refers to a clearance δ generated between a raceway surface 38a or 39a and the ball 40 at opposed positions in a diameter direction under a state in which the raceway surface 38a of the inner ring 38 or the raceway surface 39a of the outer ring 39 is in contact with the ball 40.

Moreover, in terms of the bearing material, each of the deep groove ball bearings 37a and 37b configured to support the input shaft 25 of the speed reducer in the in-wheel motor drive device 21 according to this embodiment is formed of a high-carbon chromium bearing steel in which the silicon (Si) content and the manganese (Mn) content are increased. Examples of the high-carbon chromium bearing steel in which the silicon (Si) content and the manganese (Mn) content are increased comprise SUJ3 and SUJ5 of JIS G 4805, Grade 1 and Grade 3 of ASTM A485, and also a material corresponding thereto. Chemical ingredients of those high-carbon chromium bearing steels are shown in Table 2.

**[Table 2]**

| Standard | Code | Chemical ingredient (%) | | | | | | |
|---|---|---|---|---|---|---|---|---|
| | | C | Si | Mn | P | S | Cr | Mo |
| JIS G 4805 | SUJ3 | 0.95-1.10 | 0.40-0.70 | 0.90-1.15 | 0.025 or less | 0.025 or less | 0.90-1.20 | 0.08 or less |
| | SUJ5 | 0.95-1.10 | 0.40-0.70 | 0.90-1.15 | 0.025 or less | 0.025 or less | 0.90-1.20 | 0.10-0.25 |
| ASTM A485 | Grade 1 | 0.90-1.05 | 0.45-0.75 | 0.95-1.25 | 0.025 or less | 0.025 or less | 0.90-1.20 | 0.10 or less |
| | Grade 3 | 0.95-1.10 | 0.15-0.35 | 0.65-0.90 | 0.025 or less | 0.025 or less | 1.10-1.50 | 0.20-0.30 |

In this embodiment, SUJ3 is used for the inner ring 38, the outer ring 39, and the balls 40 of each of the deep groove ball bearings 37a and 37b, and heat treatment is performed by through-hardening so that the residual austenite amount in the surface layer is 25% or more. For heat treatment conditions, the hardening temperature was set to 850°C to 880°C and in the cooling condition, the cooling power represented by H was set to 0.2 cm⁻¹ or less only in a temperature range of from 300°C to 150°C. The cooling power as used herein refers to cooling capacity of a coolant used for hardening.

The above-mentioned material and heat treatment cause the residual austenite to reduce the cracking sensitivity, and hence the modified rating life (ISO281) can be improved to achieve a long life. That is, the deep groove ball bearings 37a and 37b each having a comparable life can be downsized, and the speed reduction part B is reduced in radial dimension and has a high speed reduction ratio without exceeding the radial dimension of the motor part A, thereby being capable of realizing the durable in-wheel motor drive device 21 that is small in size and light in weight.

In this embodiment, there has been given an example in which SUJ3 is used in all of the inner ring 38, the outer ring 39, and the balls 40 of each of the deep groove ball bearings 37a and 37b and heat treatment is performed so that the residual austenite amount in the surface layer is 25% or more. However, the present invention is not limited thereto. SUJ3 and the above-mentioned heat treatment may be applied to at least one of the inner ring 38, the outer ring 39, or the balls 40. Another high-carbon chromium bearing steel in which the silicon (Si) content and the manganese (Mn) content are increased may also be used.

In this embodiment, there has been given an example in which the deep groove ball bearings 37a and 37b are used as the ball bearings configured to support the input shaft 25 of the speed reducer in the in-wheel motor drive device 21. However, the present invention is not limited thereto, and angular contact ball bearings may be applied.

The overall operation principle of the in-wheel motor drive device 21 having the above-mentioned configuration is described.

In the motor section A, for example, coils in the stator 23a is supplied with AC current to generate an electromagnetic force, which in turn rotates the rotor 23b formed of a permanent magnet or a magnetic member. The input shaft 25 of the speed reducer, which is connected to the rotation shaft 24a of the motor, is therefore rotated to cause the curved plates 26a and 26b to revolve about the rotation axis of the input shaft 25 of the speed reducer. Then, the outer pins 27 come into engagement with the curved wave patterns of the curved plates 26a and 26b to rotate the curved plates 26a and 26b on their axes in an opposite direction to the rotation of the input shaft 25 of the speed reducer.

The inner pins 31 inserted through the through-holes 30a come into contact with the inner wall surfaces of the through-holes 30a in conjunction with the rotational motion of the curved plates 26a and 26b. The revolving motion of the curved plates 26a and 26b is therefore prevented from being transmitted to the inner pins 31, and only the rotational motion of the curved plates 26a and 26b is transmitted to the wheel bearing part C through the output shaft 28 of the speed reducer.

In this process, the speed of the rotation of the input shaft 25 of the speed reducer is reduced by the speed reduction part B and the rotation is transmitted to the output shaft 28 of the speed reducer. Therefore, a necessary torque can be transmitted to the driving wheel 14 even in a case where the motor part A of a low-torque high-rotation type is employed.

When the number of the outer pins 27 and the number of wave patterns of the curved plates 26a and 26b are denoted by Z_{A} and Z_{B}, respectively, the speed reduction ratio in the speed reduction part B having the alcove-mentioned configuration is calculated by (Z_{A}-Z_{B})/Z_{B}. In the embodiment illustrated in FIG. 2, Z_{A}=12 and Z_{B}=11. Thus, a very high speed reduction ratio of 1/11 can be obtained.

The in-wheel motor drive device 21 that is compact and has a high speed reduction ratio can be obtained by using the speed reduction part B capable of obtaining a high speed reduction ratio without requiring a multi-stage configuration. Moreover, the needle roller bearings 27a and 31a (see FIG. 3) are provided to the outer pins 27 and the inner pins 31, respectively, to reduce the frictional resistance between those pins and the curved plates 26a and 26b, thereby improving the transmission efficiency of the speed reduction part B.

The unsprung weight can be reduced by mounting the in-wheel motor drive device 21 according to this embodiment on the electric vehicle 11. As a result, the electric vehicle 11 having excellent driving stability and NVH characteristics can be obtained.

Particularly in the in-wheel motor drive device 21 according to this embodiment, by setting, in the speed reduction part B comprising the lubrication mechanism for the speed reduction part, the initial radial internal clearance δ of the deep groove ball bearings 37a and 37b configured to support the input shaft 25 of the speed reducer to from 10 µm to 60 µm, more preferably from 10 µm to 40 µm, heat generation and seizure can be prevented even under conditions such as fitting to the output shaft 28 of the speed reducer and the input shaft 25 of the speed reducer, increase in temperature, and increase in temperature difference between the inner wheel and the outer wheel, and effects of noises and vibrations and decrease in the NVH characteristics caused thereby can be suppressed to the lowest possible level within a range in which processing is possible. In this way, an in-wheel motor drive device in which noises and vibrations are suppressed and the NVH characteristics are excellent can be realized in spite of the particular condition of the in-wheel motor drive device and the cycloid reducer serving as the unsprung weight.

In addition, in terms of the bearing material and heat treatment, each of the above-mentioned deep groove ball bearings 37a and 37b is formed of a high-carbon chromium bearing steel in which the silicon (Si) content and the manganese (Mn) content are increased, and is subjected to through-hardening to have a surface layer residual austenite amount of 25% or more. Therefore, the residual austenite reduces the cracking sensitivity, which allows improvement of the modified rating life (ISO281), thus achieving a long life. Therefore, the deep groove ball bearings 37a and 37b each having a comparable life can be downsized, thereby being capable of realizing the durable in-wheel motor drive device 21 that is small in size and light in weight.

In this embodiment, there has been given an example in which the lubricating oil supply port 25d is formed at each of the eccentric portions 25a and 25b and the lubricating oil supply ports 25e and 25f are formed at a midway position and an axial end of the input shaft 25 of the speed reducer, respectively, but the present invention is not limited thereto. The lubricating oil supply ports may be formed at any positions of the input shaft 25 of the speed reducer. However, from the viewpoint of stably supplying lubricating oil to the rolling bearings 41, 37a, and 37b, it is desirable to form the lubricating oil supply port 25d at each of the eccentric portions 25a and 25b, and form the lubricating oil supply ports 25e and 25f at the midway position and the axial end of the input shaft 25 of the speed reducer, respectively.

There has been given an example in which rotation of the output shaft 28 of the speed reducer is used to drive the rotary pump 51, but rotation of the input shaft 25 of the speed reducer may also be used to drive the rotary pump 51. However, the durability of the rotary pump 51 may be reduced because the number of rotations of the input shaft 25 of the speed reducer is larger (eleven times larger in this embodiment) than that of the output shaft 28 of the speed reducer. Moreover, a sufficient discharge amount can be ensured even when the rotary pump is connected to the output shaft 28 of the speed reducer, which is reduced in speed. From those points of view, rotation of the output shaft 28 of the speed reducer is desirably used to drive the rotary pump 51.

There has been given an example in which a cycloid pump is used as the rotary pump 51, but the present invention is not limited thereto. Any rotary pump that is driven using the rotation of the output shaft 28 of the speed reducer may be applied. Further, the rotary pump 51 may be omitted so that the lubricating oil is circulated only by centrifugal force.

There has been given an example in which the two curved plates 26a and 26b of the speed reduction part B are arranged with a 180° phase shift. However, the number of curved plates may be arbitrarily set and in a case where three curved plates are arranged, for example, the three curved plates may be arranged with a 120° phase shift.

There has been given an example in which the motion conversion mechanism comprises the inner pins 31 fixed to the output shaft 28 of the speed reducer and the through-holes 30a formed in the curved plates 26a and 26b. However, the present invention is not limited thereto. Any configuration may be applied as long as the rotation of the speed reduction part B can be transmitted to the hub wheel 32. For example, the motion conversion mechanism may comprise inner pins fixed to the curved plates and holes formed in the output shaft of the speed reducer.

Attention was focused on the rotation of each member to describe the operation in this embodiment. In fact, however, power containing a torque is transmitted from the motor part A to the driving wheel 14. Accordingly, the power after speed reduction as described above is converted into a high torque.

There has been given a case where electric power is supplied to the motor part A to drive the motor part and the power from the motor part A is transmitted to the driving wheel 14. Contrary to this, however, when a vehicle decelerates or travels down a slope, power from the driving wheel 14 side may be converted at the speed reduction part B into high-rotation low-torque rotation so that the rotation is transmitted to the motor part A for electric power generation in the motor part A. Further, the electric power generated in the motor part A may be stored in a battery so that the electric power is used to drive the motor part A later or to operate other electric devices provided in the vehicle.

A brake may also be added to the configuration in this embodiment. For example, in the configuration of FIG. 1, the casing 22 may be extended in its axial direction to form a space on the right side of the rotor 23b in FIG. 1, and a rotary member configured to rotate integrally with the rotor 23b, a piston non-rotatable with respect to the casing 22 and movable in its axial direction, and a cylinder configured to operate the piston may be arranged, thereby constructing a parking brake in which the rotor 23b is locked by the piston and the rotary member while a vehicle is stopped.

There may also be employed a disc brake in which a flange formed at a part of a rotary member configured to rotate integrally with the rotor 23b and a friction plate arranged on the casing 22 side are sandwiched using a cylinder arranged on the casing 22 side. There may also be employed a drum brake in which a drum is formed at a part of a rotary member and a brake shoe is fixed on the casing 22 side so that the rotary member is locked by the actions of frictional engagement and self-engagement.

In this embodiment, there has been given an example in which a radial gap motor is employed in the motor part A. However, the present invention is not limited thereto, and a motor having any configuration is applicable. For example, there may be used an axial gap motor comprising a stator to be fixed to a casing, and a rotor arranged on the side of the stator at an opposed position with an axial gap.

In addition, there has been given an example in which the rear wheels 14 of the electric vehicle 11 illustrated in FIG. 10 serve as driving wheels. However, the present invention is not limited thereto, and the front wheels 13 may be used as driving wheels or a four-wheel drive vehicle may be used. It should be understood that "electric vehicle" as used herein is a concept encompassing all vehicles that may obtain driving force from electric power and also encompasses, for example, a hybrid car.

The present invention is not limited to the above-mentioned embodiment. As a matter of course, the present invention may be carried out in various modes without departing from the gist of the present invention. The scope of the present invention is defined in claims, and encompasses equivalents described in claims and all changes within the scope of claims.

### DESCRIPTION OF REFERENCE SIGNS

11 electric vehicle, 12 chassis, 12a wheel housing, 12b suspension device, 13 front wheel, 14 rear wheel, 21 in-wheel motor drive device, 22 casing, 22b lubricating oil discharge port, 22d lubricating oil reservoir, 22e lubricating oil path, 23a stator, 23b rotor, 24a rotation shaft of motor, 25 input shaft of speed reducer, 25a eccentric portion, 25b eccentric portion, 25c lubricating oil path, 25d lubricating oil supply port, 25e lubricating oil supply port, 25f lubricating oil supply port, 26a curved plate, 26b curved plate, 27 outer pin, 27a needle roller bearing, 28 output shaft of speed reducer, 29 counterweight, 30b through-hole, 31 inner pin, 31a needle roller bearing, 31b stabilizer, 31c annular portion, 31d cylindrical portion, 32 hub wheel, 33 wheel bearing, 33a inner ring, 33b outer ring, 33c ball, 33d cage, 33e sealing member, 33f inner raceway surface, 36a rolling bearing, 36b rolling bearing, 37a rolling bearing, 37b rolling bearing, 38 inner ring, 38a inner raceway surface, 39 outer ring, 39a outer raceway surface, 40 ball, 41 rolling bearing, 42 inner ring, 43 outer raceway surface, 44 cylindrical roller, 45 circulation oil path, 45a axial oil path, 45b radial oil path, 45c radial oil path, 46 rolling bearing, 51 rotary pump, 52 inner rotor, 53 outer rotor, 54 pump chamber, 55 suction port, 56 discharge port, 60 outer pin housing

## Claims

1. An in-wheel motor drive device, comprising:
a motor part;
a speed reduction part;
a wheel bearing part; and
a casing configured to hold the motor part, the speed reduction part, and the wheel bearing part,
the motor part being configured to rotationally drive an input shaft of a speed reducer having eccentric portions,
the speed reduction part being configured to reduce a speed of rotation of the input shaft of the speed reducer to transmit the rotation to an output shaft of the speed reducer,
the wheel bearing part being connected to the output shaft of the speed reducer,
the speed reduction part comprising:
the input shaft of the speed reducer;
revolving members rotatably held at the eccentric portions of the input shaft of the speed reducer, respectively, and configured to perform revolving motion about a rotation axis of the input shaft of the speed reducer in conjunction with the rotation of the input shaft of the speed reducer;
outer periphery engagement members engaged with outer peripheral portions of the revolving members to cause rotational motion of the revolving members;
a motion conversion mechanism configured to convert the rotational motion of the revolving members into rotary motion about the rotation axis of the input shaft of the speed reducer to transmit the rotary motion to the output shaft of the speed reducer; and
a lubrication mechanism for the speed reduction part, which is configured to supply lubricating oil to the speed reduction part,
the input shaft of the speed reducer being rotatably supported by rolling bearings,
the rolling bearings configured to support the input shaft of the speed reducer comprising ball bearings each having an initial radial internal clearance (δ) of from 10 µm to 60 µm.

2. The in-wheel motor drive device according to claim 1,
wherein at least one of a raceway ring or a rolling element of each of the ball bearings is formed of a high-carbon chromium bearing steel with increased contents of silicon (Si) and manganese (Mn), and
wherein the high-carbon chromium bearing steel is subjected to through-hardening so as to have a surface layer residual austenite amount of 25% or more.

3. The in-wheel motor drive device according to claim 1 or 2, wherein the initial radial internal clearance (δ) of the each of the ball bearings is from 10 µm to 40 µm.

4. The in-wheel motor drive device according to any one of claims 1 to 3, wherein the each of the ball bearings comprises a deep groove ball bearing.
